# EUROPÄISCHE PATENTSCHRIFT

(11) **EP 3 999 811 B1**
(45) Veröffentlichungstag und Bekanntmachung des Hinweises auf die Patenterteilung: **21.08.2024**
(21) Anmeldenummer: 20734938.2
(22) Anmeldetag: 25.06.2020
(51) Int. Cl.: G01C 21/36, G06F 3/01, G08G 1/16, B60W 30/08, G06V 40/10

(54) **BEREITSTELLUNG UND ÜBERTRAGUNG VON POSITIONSDATEN EINER UMGEBUNG EINES KRAFTFAHRZEUGS**
PROVISION AND TRANSMISSION OF POSITION DATA OF THE SURROUNDINGS OF A MOTOR VEHICLE
PRÉPARATION ET TRANSMISSION DE DONNÉES DE POSITION D'UN ENVIRONNEMENT D'UN VÉHICULE À MOTEUR

(30) Priorität: 19.07.2019 DE 102019210758
(43) Veröffentlichungstag der Anmeldung: 25.05.2022
(73) Patentinhaber: Volkswagen Aktiengesellschaft, 38440 Wolfsburg (DE)
(72) Erfinder: EHMANN, Sebastian, 38302 Wolfenbüttel (DE); RICHTER, Robin, 38518 Gifhorn (DE)
(86) Internationale Anmeldenummer: PCT/EP2020/067962
(87) Internationale Veröffentlichungsnummer: WO 2021/013469

(56) Entgegenhaltungen:
- WO-A1-2016/035281
- WO-A1-2018/173454
- DE-A1- 102012 219 280
- DE-A1- 102018 218 875
- DE-T5- 112018 001 581
- US-A1- 2010 225 461
- US-A1- 2018 118 106
- US-A1- 2018 162 388
- US-B1- 10 347 132

## Beschreibung

Die vorliegende Erfindung betrifft ein Verfahren zur Bereitstellung von Positionsdaten einer Umgebung eines Kraftfahrzeugs, ein Verfahren zur Übertragung von Positionsdaten einer Umgebung eines Kraftfahrzeugs sowie ein entsprechendes Kommunikationssystem und ein Kraftfahrzeug.

In manchen Situationen, in denen eine Person einen speziellen Ort beschreiben will, ist es nicht möglich oder unzureichend, herkömmliche Angaben wie Straße und Hausnummer des Orts zu dessen Positionsbeschreibung zu verwenden. Dies kann beispielsweise der Fall sein, wenn die genaue Position eines Parkplatzes oder eines Ablageorts für einen Gegenstand beschrieben werden soll.

In solchen Fällen kann die Person beispielsweise die exakten Koordinaten des Orts mittels eines globalen Navigationssatellitensystems, GNSS, bestimmen. Dazu ist jedoch ein entsprechend ausgestattetes Gerät erforderlich und die Bestimmung und Bereitstellung der Koordinaten zur Übertragung an einen Empfänger kann umständlich sein.

Im Dokument DE 10 2009 045 040 A1 wird ein Navigationssystem beschrieben, welches eine Kamera umfasst, um ein Bild aufzunehmen und gleichzeitig eine Position des Navigationssystems zu bestimmen sowie eine Zuordnung der Position zu dem Bild durchzuführen. Das Bild und die zugeordnete Position können gespeichert werden und zu einem späteren Zeitpunkt kann das Bild zur einfachen Auswahl eines Navigationsziels benutzt werden.

Auch im Dokument US 2006/0164412 A1 wird ein Navigationssystem für ein Kraftfahrzeug angegeben. Mittels eines GPS-Systems kann die Geoposition des Kraftfahrzeugs bestimmt werden und mittels eines Umfeldscanners kann ein dreidimensionales Bild der Umgebung des Kraftfahrzeugs erfasst werden. Die erfassten Daten können mit weiteren Kraftfahrzeugen geteilt werden, welche diese zur Navigation verwenden können.

Dokument US 2018/162388 A1 beschreibt eine Vorrichtung zum Verhindern eines Zusammenstoßes eines Fahrzeugs mit einem Fußgänger. Es werden eine Bewegungsrichtung und eine Geschwindigkeit eines Fußgängers basierend unter anderem auf Bilddaten berechnet. Es wird gegebenenfalls bestimmt, dass sich der Fußgänger einer Gefahrenzone nähert.

Dokument US 10 347 132 B1 beschreibt ein System zum Vermeiden einer Kollision mit einem Fußgänger. Ein Steuerungssystem benutzt entsprechende Geschwindigkeiten, um einen Kollisionszeitpunkt und eine Kollisionsposition eines dritten Fahrzeugs mit einem Fußgänger zu berechnen.

In bekannten Systemen ist es jedoch von Nachteil, dass die Position des Navigationssystems beziehungsweise des Kraftfahrzeugs gegebenenfalls ebenfalls zu ungenau ist, um die Position des Ortes zu definieren.

Vor diesem Hintergrund ist es eine Aufgabe der vorliegenden Erfindung, ein verbessertes Konzept zur Bereitstellung von Positionsdaten einer Umgebung eines Kraftfahrzeugs anzugeben, mit dem die Position eines Ortes mit höherer Genauigkeit bereitgestellt werden kann.

Das verbesserte Konzept beruht auf der Idee, mithilfe eines Umfeldsensorsystems des Kraftfahrzeugs eine Geste einer Person zu erkennen und die Positionsdaten basierend auf der erkannten Geste zur Verfügung zu stellen.

Gemäß einem ersten unabhängigen Aspekt des verbesserten Konzepts wird ein Verfahren zur Übertragung von Positionsdaten einer Umgebung eines Kraftfahrzeugs gemäß Anspruch 1 angegeben. Mittels eines Umfeldsensorsystems des Kraftfahrzeugs wird eine Bildsequenz der Umgebung erzeugt. Mittels einer Recheneinheit des Kraftfahrzeugs wird eine Geste einer Person in der Umgebung basierend auf der Bildsequenz erkannt. Mittels der Recheneinheit wird basierend auf der Geste ein Punkt oder ein Bereich in der Umgebung identifiziert und Positionsdaten des Punktes oder des Bereichs werden erzeugt. Die Positionsdaten werden mittels einer Kommunikationsschnittstelle des Kraftfahrzeugs zur Übertragung an ein Empfangsgerät bereitgestellt.

Mittels der Recheneinheit werden basierend auf der Bildsequenz aufbereitete Bilddaten erzeugt, in denen der Punkt oder der Bereich visuell hervorgehoben ist, wobei die Positionsdaten die aufbereiteten Bilddaten beinhalten und/oder es werden mittels einer Benutzerschnittstelle des Kraftfahrzeugs basierend auf der Bildsequenz eine Darstellung der Umgebung und des Punkts oder des Bereichs in der Umgebung visuell angezeigt, mittels der Benutzerschnittstelle ein Korrekturbefehl von einem Benutzer erfasst, und mittels der Recheneinheit die Positionsdaten abhängig von dem Korrekturbefehl erzeugt.

Bei der Bildsequenz der Umgebung handelt es sich um eine Bildsequenz, welche die Umgebung abbildet, insbesondere um mehrere, also wenigstens zwei, zeitlich aufeinanderfolgende Abbildungen der Umgebung. Eine Abbildung der Umgebung kann beispielsweise einem Kamerabild entsprechen, sodass die Bildsequenz auch als Videosequenz bezeichnet werden kann. Die Abbildung kann auch einer zwei- oder dreidimensionalen Punktwolke von Abtastpunkten der Umgebung entsprechen.

Entsprechend enthält das Umfeldsensorsystem ein Sensorsystem, das zur zeitaufgelösten Abbildung der Umgebung geeignet ist, beispielsweise ein Kamerasystem, beispielsweise eine Top-View-Kamera, oder ein Sensorsystem zur zwei- oder dreidimensionalen Abtastung der Umgebung, beispielsweise ein Radarsystem oder ein Lidarsystem.

Unter der Geste der Person kann eine charakteristische vordefinierte Bewegung oder eine Abfolge charakteristischer vordefinierter Bewegungen der Person verstanden werden. Beispielsweise kann eine vordefinierte Bewegung eines Körperteils der Person, beispielsweise eine Arm-, Hand-, Bein- oder Kopfbewegung, der Person von der Geste beinhaltet sein. Die Geste kann auch ein Gehen der Person beinhalten.

Zum Erkennen der Geste basierend auf der Bildsequenz analysiert die Recheneinheit insbesondere die zeitlich aufeinanderfolgenden Abbildungen der Bildsequenz und identifiziert eine Abweichung einer Position der Person oder eines Körperteils der Person in unterschiedlichen der Abbildungen als Bewegung der Person. Die Bewegung der Person oder des Körperteils wird mit vorab gespeicherten Referenzdaten verglichen. Erkennt die Recheneinheit, dass die Referenzdaten mit einer vorgegebenen Genauigkeit der identifizierten Bewegung entsprechen, so kann die Geste als erkannt angesehen werden. Insbesondere können auf einer Speichereinheit des Kraftfahrzeugs oder der Recheneinheit Referenzdaten betreffend eine oder mehrere vorgegebene Referenzgesten gespeichert sein. Die Recheneinheit erkennt dann insbesondere, dass die Geste der Person mit einer der Referenzgesten wenigstens näherungsweise übereinstimmt, um die Geste zu erkennen.

Das Identifizieren des Punktes beziehungsweise des Bereichs in der Umgebung durch die Recheneinheit kann beispielsweise das Identifizieren eines entsprechenden Bildpunkts oder Bildbereichs in einer oder mehreren der Abbildungen der Bildsequenz beinhalten. Je nach Ausgestaltung des Umfeldsensorsystems kann der Bildpunkt oder der Bildbereich unterschiedlich ausgestaltet sein. Im Falle eines Kamerasystems kann der Punkt oder Bereich der Umgebung beispielsweise einem Bildpunkt oder Bildbereich, also einer zusammenhängenden Menge von mehreren Bildpunkten, der entsprechenden Kamerabilder entsprechen. Im Falle eines Lidar- oder Radarsystems kann der Punkt oder Bereich der Umgebung einer Untermenge einer Punktwolke, also einer entsprechenden Anzahl von Abtastpunkten, entsprechen.

Das Identifizieren des Punktes beziehungsweise des Bereichs kann beispielsweise auch das Bestimmen entsprechender Koordinaten des Punktes oder Bereichs in einem Sensorkoordinatensystem des Umfeldsensorsystems beinhalten. Das Sensorkoordinatensystem entspricht insbesondere einem starr mit dem Umfeldsensorsystem und insbesondere mit dem Kraftfahrzeug verbundenen Koordinatensystem.

Die Positionsdaten können insbesondere eine entsprechende Position, insbesondere Relativposition, des Punktes oder Bereichs innerhalb der Abbildungen der Bildsequenz beinhalten und/oder eine Position des Punktes oder Bereichs bezüglich eines Referenzkoordinatensystems, beispielsweise eines Weltkoordinatensystems, wie beispielsweise WGS84, oder eines Kartenkoordinatensystems einer digitalen Karte des Kraftfahrzeugs.

Das Bereitstellen der Positionsdaten zur Übertragung an das Empfangsgerät beinhaltet das Erzeugen eines zu übertragenden Übertragungssignals basierend auf der Positionsdaten oder das Bereitstellen der Positionsdaten, um das Übertragungssignal erzeugen zu können.

Durch die Bestimmung der Positionsdaten abhängig von der Geste der Person können insbesondere Punkte oder Bereiche der Umgebung spezifiziert werden, unabhängig davon, ob sie in Karten oder in sonstigen Datenbanken verzeichnet sind. Punkte, die nicht in Karten verzeichnet sind können sich beispielsweise auf privatem Gelände befinden oder Abweichungen von auf der Karte gespeicherten Positionen betreffen, beispielsweise im Falle nicht aktueller oder veralteter Karten. Solche Punkte können anhand des verbesserten Konzepts mit hoher Genauigkeit erfasst und entsprechend übermittelt und genutzt werden. Durch die Verwertung der Geste wird auch eine hohe Intuitivität für Benutzer, insbesondere für die Person oder den Empfänger, erreicht. Insbesondere benötigt ein Empfänger der Positionsdaten kein System zur Positionsbestimmung, um den Punkt oder Bereich der Umgebung auffinden zu können.

Die aufbereiteten Bilddaten entsprechen beispielsweise einem oder mehreren Kamerabildern oder sonstigen Darstellungen der Umgebung, wobei der Punkt oder der Bereich markiert oder hervorgehoben ist.

Dadurch ist beispielsweise die exakte Position des Kraftfahrzeugs nicht erforderlich, was vorteilhaft sein kann, insbesondere wenn die Position des Kraftfahrzeugs bei der Aufnahme der Bildsequenz nicht exakt ermittelbar ist, beispielsweise weil sich das Kraftfahrzeug in einem Gebäude befindet und keine GNSS Signale empfangen werden können. Indem die aufbereiteten Bilddaten bereitgestellt werden und beispielsweise dem potentiellen Empfänger zur Verfügung gestellt werden, kann dieser die Position des Ortes oder Bereichs anhand des Kontexts der Hervorhebung in dem Kamerabild oder der Darstellung erkennen, insbesondere wenn dem Empfänger die ungefähre Position des Punkts oder Bereichs bekannt ist.

Die Darstellung der Umgebung und des Punkts oder Bereichs kann beispielsweise den Abbildungen oder einer der Abbildungen der Bildsequenz entsprechen oder sonstigen Abbildungen der Umgebung, beispielsweise Satellitenbildern.

Dadurch kann der Benutzer prüfen, ob die Position des Punkts oder Bereichs wie gewünscht erfasst wurde und gegebenenfalls Korrekturen vornehmen.

Gemäß zumindest einer Ausführungsform ist das Kraftfahrzeug als autonomes Kraftfahrzeug, insbesondere gemäß einer Klasse 5 der SAE J3016-Klassifizierung mit Stand vom Juni 2018 ausgestaltet.

In solchen Ausführungsformen kann das Kraftfahrzeug beispielsweise selbsttätig der Person in der Umgebung folgen, um die Person in einem Sichtfeld des Umfeldsensorsystems zu behalten.

Gemäß zumindest einer Ausführungsform des Verfahrens zur Bereitstellung der Positionsdaten wird eine Position des Kraftfahrzeugs mittels der Recheneinheit in einem vorgegebenen Referenzkoordinatensystem bestimmt. Ortskoordinaten des Punktes oder des Bereichs in dem Referenzkoordinatensystem werden basierend auf der Position des Kraftfahrzeugs bestimmt, wobei die Positionsdaten die Ortskoordinaten des Punktes oder des Bereichs beinhalten.

Insbesondere können die Ortskoordinaten des Punktes oder Bereichs im Referenzkoordinatensystem basierend auf der Position des Kraftfahrzeugs im Referenzkoordinatensystem, der Position des Punktes oder des Bereichs im Sensorkoordinatensystem und der Position des Sensorkoordinatensystems bezüglich des Referenzkoordinatensystems bestimmt werden.

Bei dem Referenzkoordinatensystem kann es sich insbesondere um ein Referenzkoordinatensystem eines globalen Navigationssatellitensystems, beispielsweise des GPS-Systems, handeln, beispielsweise um ein geodätisches Referenzsystem, beispielsweise um das WGS84-Koordinatensystem.

In solchen Ausführungsformen beinhalten die Positionsdaten insbesondere objektive Positionsangaben, sodass der Empfänger oder potentielle Empfänger der auch die ungefähre Position des Punktes oder Bereichs nicht kennen muss, um ihn auffinden zu können.

Gemäß zumindest einer Ausführungsform werden mittels einer Satellitenempfangseinheit des Kraftfahrzeugs Satellitensignale, insbesondere des globalen Navigationssatellitensystems, erfasst und die Position des Kraftfahrzeugs wird mittels der Recheneinheit abhängig von den Satellitensignalen bestimmt.

Gemäß zumindest einer Ausführungsform wird die Position des Kraftfahrzeugs mittels der Recheneinheit basierend auf der Bildsequenz und auf Kartendaten einer digitalen Karte des Kraftfahrzeugs bestimmt.

Insbesondere kann die Recheneinheit basierend auf der Bildsequenz oder basierend auf einzelnen Abbildungen der Bildsequenz eine oder mehrere Landmarken in der Umgebung des Kraftfahrzeugs erkennen und die Landmarken mit auf der digitalen Karte gespeicherten Daten vergleichen, um die Position des Kraftfahrzeugs zu bestimmen.

Solche Ausführungsformen können insbesondere vorteilhaft sein, wenn das Umfeldsensorsystem ein Radar- oder Lidarsystem enthält, um besonders präzise dreidimensionale oder zweidimensionale Abtastpunkte der Umgebung zu erfassen.

Bei der digitalen Karte handelt es sich insbesondere um eine Datenbank, auf der Positionsdaten von Fahrbahnen und Objekten mit einer Genauigkeit im Bereich von einem oder wenigen Zentimetern gespeichert sind. Solche digitalen Karten können auch als HD-Karten bezeichnet werden. Insbesondere teilweise oder vollständig autonome Kraftfahrzeuge bedienen sich zur Egolokalisierung solcher digitaler Karten. Damit kann eine besonders hohe Genauigkeit erzielt werden.

Gemäß zumindest einer Ausführungsform werden mittels des Umfeldsensorsystems oder mittels eines weiteren Umfeldsensorsystems des Kraftfahrzeugs Umfelddaten der Umgebung bestimmt und die Position des Kraftfahrzeugs wird mittels der Recheneinheit basierend auf den Umfelddaten und auf Kartendaten der digitalen Karte des Kraftfahrzeugs bestimmt.

Im Unterschied zur vorher beschriebenen Ausführungsform werden hier also separat erzeugte Umfelddaten anstelle der Bildsequenz verwendet, um die Position des Kraftfahrzeugs zu bestimmen.

Das Empfangsgerät kann beispielsweise ein Empfangsgerät eines weiteren Kraftfahrzeugs, beispielsweise eine weitere Kommunikationsschnittstelle des weiteren Kraftfahrzeugs, beinhalten. Das Empfangsgerät kann auch Teil eines Servercomputers oder eines sonstigen stationären oder mobilen Computersystems sein, beispielsweise Teil eines mobilen elektronischen Geräts, beispielsweise eines Smartphones oder Tablet-Computers.

Die drahtlose Übertragung kann beispielsweise mittels WLAN oder einer sonstigen Funkverbindung, beispielsweise einer Mobilfunkverbindung gemäß einem vorgegebenen Mobilfunkstandard, erfolgen. Insbesondere kann die Kommunikationsschnittstelle als V2V-(Vehicle-to-Vehicle) und/oder V2X- (Vehicle-to-X)Schnittstelle ausgestaltet sein.

Zum Übertragen der Positionsdaten erzeugt die Kommunikationsschnittstelle insbesondere das Übertragungssignal und sendet es aus.

Gemäß einem weiteren unabhängigen Aspekt des verbesserten Konzepts wird ein Kommunikationssystem gemäß Anspruch 7 angegeben. Das Kommunikationssystem weist eine Recheneinheit für ein Kraftfahrzeug auf, eine Kommunikationsschnittstelle für das Kraftfahrzeug sowie ein Umfeldsensorsystem für das Kraftfahrzeug. Das Umfeldsensorsystem ist dazu eingerichtet, eine Bildsequenz einer Umgebung des Kraftfahrzeugs zu erzeugen. Die Recheneinheit ist dazu eingerichtet, eine Geste einer Person in der Umgebung basierend auf der Bildsequenz zu erkennen und basierend auf der Geste einen Punkt oder einen Bereich in der Umgebung zu identifizieren und Positionsdaten des Punktes oder des Bereichs zu erzeugen. Die Kommunikationsschnittstelle ist dazu eingerichtet, die Positionsdaten zur Übertragung an das Empfangsgerät bereitzustellen. Die Recheneinheit ist dazu eingerichtet, basierend auf der Bildsequenz aufbereitete Bilddaten zu erzeugen, in denen der Punkt oder der Bereich visuell hervorgehoben ist, wobei die Positionsdaten die aufbereiteten Bilddaten beinhalten und/oder das Kommunikationssystem weist eine Benutzerschnittstelle für das Kraftfahrzeug auf, die dazu eingerichtet ist, basierend auf der Bildsequenz eine Darstellung der Umgebung und des Punkts oder des Bereichs in der Umgebung visuell anzuzeigen und einen Korrekturbefehl von einem Benutzer zu erfassen, wobei die Recheneinheit dazu eingerichtet ist, die Positionsdaten abhängig von dem Korrekturbefehl zu erzeugen.

Weitere Ausgestaltungsformen des Kommunikationssystems nach dem verbesserten Konzept ergeben sich unmittelbar aus den verschiedenen Ausgestaltungen der Verfahren nach dem verbesserten Konzept und jeweils umgekehrt. Insbesondere kann das Kommunikationssystem nach dem verbesserten Konzept dazu programmiert oder eingerichtet sein, ein Verfahren zum Bereitstellen von Positionsdaten und/oder ein Verfahren zum Übertragen von Positionsdaten nach dem verbesserten Konzept durchzuführen oder das Kommunikationssystem nach dem verbesserten Konzept führt ein solches Verfahren nach dem verbesserten Konzept aus.

Gemäß einem weiteren unabhängigen Aspekt des verbesserten Konzepts wird ein Kraftfahrzeug mit einem Kommunikationssystem nach dem verbesserten Konzept angegeben.

Zu der Erfindung gehören auch Weiterbildungen des erfindungsgemäßen Kommunikationssystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kommunikationssystems hier nicht noch einmal explizit beschrieben.

Die Erfindung umfasst auch die Kombinationen der Merkmale der beschriebenen Ausführungsformen.

Im Folgenden sind Ausführungsbeispiele der Erfindung beschrieben.

In den Fig. zeigen:
- Fig. 1: ein Kraftfahrzeug mit einer schematischen Darstellung einer beispielhaften Ausführungsform eines Kommunikationssystems nach dem verbesserten Konzept; und
- Fig. 2: ein Ablaufdiagramm einer beispielhaften Ausführungsform eines Verfahrens zum Übertragen von Positionsdaten nach dem verbesserten Konzept.

Bei den im Folgenden erläuterten Ausführungsbeispielen handelt es sich um bevorzugte Ausführungsformen der Erfindung.

In den Figuren sind funktionsgleiche Elemente jeweils mit denselben Bezugszeichen versehen.

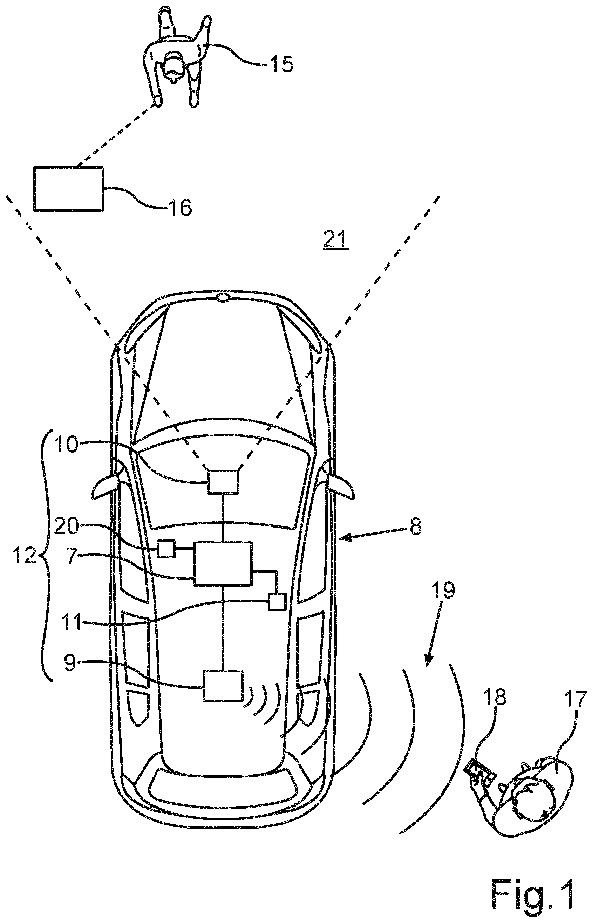

In Fig. 1 ist ein Kraftfahrzeug 8 gezeigt, das ein Kommunikationssystem 12 nach dem verbesserten Konzept aufweist.

Das Kommunikationssystem 12 beinhaltet eine Recheneinheit 7 und ein mit der Recheneinheit 7 verbundenes Umfeldsensorsystem, das beispielsweise eine Kamera 10 aufweist. In einem Sichtfeld 21 der Kamera 10 befinden sich eine Person 15 sowie ein Punkt oder Bereich 16. In alternativen Ausführungsformen kann das Umfeldsensorsystem zusätzlich oder alternativ zu der Kamera 10 ein Lidarsystem aufweisen. Das Kommunikationssystem 12 weist außerdem eine mit der Recheneinheit 7 gekoppelte Kommunikationsschnittstelle 9 auf.

Optional kann das Kommunikationssystem 12 oder das Kraftfahrzeug 8 eine Benutzerschnittstelle 20 aufweisen, die mit der Recheneinheit 7 gekoppelt ist und beispielsweise ein Display oder sonstiges visuelles Anzeigegerät beinhaltet.

Optional kann das Kraftfahrzeug 8 oder das Kommunikationssystem 12 eine Satellitenempfangseinheit 11, beispielsweise einen GPS-Empfänger, beinhalten, der ebenfalls mit der Recheneinheit 7 gekoppelt ist.

In Fig. 1 ist außerdem ein Empfangsgerät 18 gezeigt, beispielsweise ein Smartphone, das im nicht beschränkenden Beispiel der Fig. 1 von einer Empfangsperson 17 mitgeführt wird. Zudem ist ein Übertragungssignal 19 gezeigt, das von der Kommunikationsschnittstelle 9 ausgesendet wird und von dem Empfangsgerät 18 empfangen werden kann.

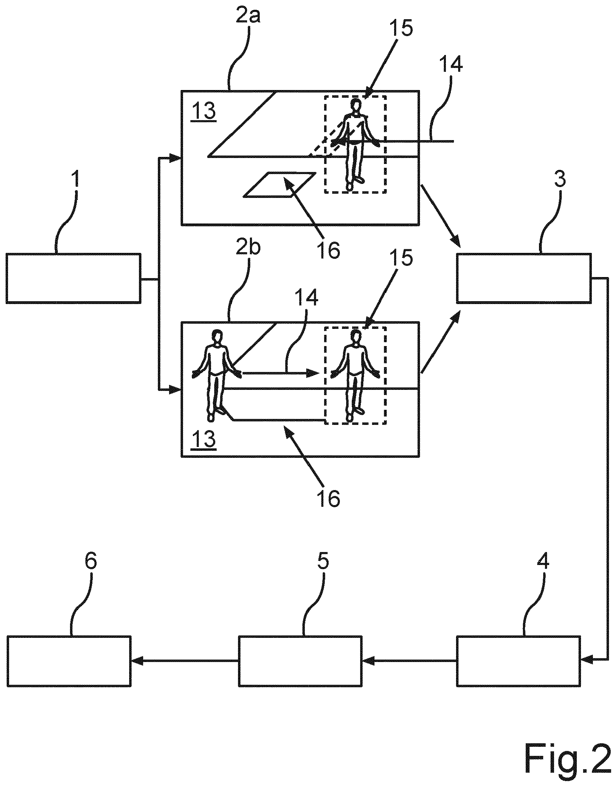

Die Funktionsweise des Kommunikationssystems 12 nach dem verbesserten Konzept wird im Folgenden anhand einer beispielhaften Ausführungsform eines Verfahrens zum Bereitstellen und Übertragen von Positionsdaten gemäß dem verbesserten Konzept bezüglich des Ablaufdiagramms der Fig. 2 erläutert.

In Schritt 1 des Verfahrens nimmt die Kamera 10 eine Bildsequenz der Umgebung des Kraftfahrzeugs 8 auf, die das Sichtfeld 21 abbildet.

In Schritt 2a des Verfahrens erkennt die Recheneinheit 7 anhand der Bildsequenz, dass die Person 15 eine Armbewegung ausführt, die einer vordefinierten Geste 14 entspricht, indem die Person 15 insbesondere mit dem Arm auf den Punkt oder Bereich 16 zeigt. Die Recheneinheit 7 identifiziert basierend auf der Geste eine Position des Punktes oder Bereichs 16 innerhalb einer Abbildung der Bildsequenz 13 und/oder in Koordinaten eines entsprechenden Sensorkoordinatensystems.

Alternativ zu Schritt 2a kann die Geste 14 einer Bewegung des Benutzers 15 innerhalb der Umgebung des Kraftfahrzeugs 8 entsprechen. Die Recheneinheit 7 erkennt in Schritt 2b die Bewegung der Person 15 als vordefinierte Geste und identifiziert den Bereich 16 anhand des Weges, den die Person 15 zurücklegt.

In Schritt 3 kann die Recheneinheit 7 beispielsweise basierend auf Satellitendaten, die mittels der Satellitenempfangseinheit 11 oder basierend auf Kartendaten aus einer digitalen Karte des Kraftfahrzeugs 8 eine Position des Kraftfahrzeugs 8 in einem Referenzkoordinatensystem bestimmen.

Die Recheneinheit 7 kann in Schritt 3 die Bildsequenz 13, insbesondere eine oder mehrere Abbildungen der Bildsequenz 13, aufbereiten, indem ein Bild erzeugt wird, das die Umgebung des Kraftfahrzeugs 8 zeigt, in der der Punkt oder Bereich 16 grafisch oder visuell hervorgehoben ist, und/oder es können in Schritt 4 des Verfahrens die aufbereiteten Bilddaten mittels der Benutzerschnittstelle 20 visuell dargestellt, insbesondere auf dem Display oder Bildschirm. Ein Benutzer des Kraftfahrzeugs 8 kann mittels der Benutzerschnittstelle 20 Korrekturen vornehmen, um die Position beziehungsweise die Definition des Punkts oder Bereichs innerhalb der Umgebung zu korrigieren.

In Schritt 5 erzeugt die Kommunikationsschnittstelle 9 basierend auf den Positionsdaten und, falls zutreffend, den Korrekturen das Übertragungssignal 19 und sendet es an das Empfangsgerät 18.

In Schritt 6 des Verfahrens empfängt das Empfangsgerät 18 das Übertragungssignal 19 und kann basierend auf dem Übertragungssignal 19 die aufbereiteten Bilddaten und/oder die Position des Punkts oder Bereichs 16 in Form von Koordinaten in dem Referenzkoordinatensystem bestimmen.

Gemäß verschiedener Ausführungen des verbesserten Konzepts kann eine Person mithilfe der in dem Kraftfahrzeug befindlichen Sensoren, beispielsweise mithilfe einer Top-View-Kamera, eine Position oder einen Bereich beschreiben. Dazu kann das Kraftfahrzeug in verschiedenen Ausführungen als autonomes Kraftfahrzeug ausgestaltet sein und dem Benutzer des Systems in einem beispielsweise begrenzten Bereich folgen, insbesondere über einen Wechsel zwischen Sensoren oder mittels einer schwenkbaren Kamera, sonstigen ausrichtbaren Sensoren oder auch durch Hinterherfahren. Die Person "zeigt" dem Kraftfahrzeug gewissermaßen einen bestimmten Bereich beziehungsweise Punkt in der Umgebung, dessen Position einer anderen Person oder einem sonstigen Empfänger übermittelt werden soll. Die Position kann beispielsweise in Form von Koordinaten, welche von dem Kraftfahrzeug ermittelt werden und beispielsweise in eine digitale Karte eingetragen werden können, oder in Form von mit zusätzlichen Informationen, insbesondere Positionsinformationen bezüglich des Punkts oder Bereichs, versehenen Bilddaten übermittelt werden.

Der Empfänger kann diese Informationen vielfältig nutzen, beispielsweise um ein weiteres Kraftfahrzeug korrekt an dem dafür bestimmten Platz zu parken oder beispielsweise um einen Gegenstand abzustellen.

Alternativ oder zusätzlich zu der Position, beispielsweise im Falle fehlender Möglichkeiten zur exakten Positionsbestimmung des Kraftfahrzeugs, können die Bilddaten oder Sensordaten zusammen mit einer visuell hervorgehobenen Position des Punkts oder Bereichs übertragen werden.

Im Folgenden werden drei beispielhafte Anwendungsfälle des verbesserten Konzepts skizziert. In einem ersten Anwendungsfall möchte ein Nutzer A einem Nutzer B verfügbare Parkplätze auf seinem Grundstück zeigen. Hierzu zeigt der Nutzer A seinem Kraftfahrzeug einen Bereich, in dem der Nutzer B parken soll. Entsprechend kann Nutzer A auch ein Mietfahrzeug bestellen, das auf der übermittelten Position geparkt werden soll.

In einem zweiten Anwendungsbeispiel erwartet ein Nutzer eine Lieferung eines großen Gegenstands und zeigt seinem Kraftfahrzeug, wo diese abgestellt werden soll. Diese Position wird beispielsweise an den Lieferanten des Gegenstands übermittelt. Dieses Vorgehen kann beispielsweise auch für das Abladen von Baumaterialien genutzt werden.

In einem dritten Ausführungsbeispiel möchte der Nutzer auf einer größeren Fläche ohne weitere Markierungen kennzeichnen, in welchen Korridoren sich weitere Fahrzeuge bewegen sollen. Durch entsprechende Gesten und Bewegungen kann er den Bereich markieren, der beispielsweise in die digitale Karte eingetragen und weiteren Nutzern übermittelt werden kann.

### Bezugszeichenliste

- 1: Verfahrensschritt
- 2a: Verfahrensschritt
- 2b: Verfahrensschritt
- 3: Verfahrensschritt
- 4: Verfahrensschritt
- 5: Verfahrensschritt
- 6: Verfahrensschritt
- 7: Recheneinheit
- 8: Kraftfahrzeug
- 9: Kommunikationsschnittstelle
- 10: Kamera
- 11: Satellitenempfangseinheit
- 12: Kommunikationssystem
- 13: Bildsequenz
- 14: Geste
- 15: Person
- 16: Punkt oder Bereich
- 17: Empfangsperson
- 18: Empfangsgerät
- 19: Übertragungssignal
- 20: Benutzerschnittstelle
- 21: Sichtfeld

## Patentansprüche

1. Verfahren zur Übertragung von Positionsdaten einer Umgebung eines Kraftfahrzeugs (8), wobei mittels eines Umfeldsensorsystems (10) des Kraftfahrzeugs (8) eine Bildsequenz (13) der Umgebung erzeugt wird, mittels einer Recheneinheit (7) des Kraftfahrzeugs (8) eine Geste (14) einer Person (15) in der Umgebung basierend auf der Bildsequenz (13) erkannt wird, mittels der Recheneinheit (7) basierend auf der Geste (14) ein Punkt oder ein Bereich (16) in der Umgebung identifiziert wird und Positionsdaten des Punktes oder des Bereichs (16) erzeugt werden, die Positionsdaten mittels einer Kommunikationsschnittstelle (9) des Kraftfahrzeugs (8) zur Übertragung an ein Empfangsgerät (18) bereitgestellt werden, wobei das Bereitstellen der Positionsdaten zur Übertragung an das Empfangsgerät (18) das Erzeugen eines zu übertragenden Übertragungssignals basierend auf den Positionsdaten beinhaltet, die Positionsdaten mittels der Kommunikationsschnittstelle (9) durch Aussenden des Übertragungssignals drahtlos an das Empfangsgerät (18) übertragen werden, wobei das Empfangsgerät (18) ein Empfangsgerät eines weiteren Kraftfahrzeugs beinhaltet oder Teil eines Servercomputers ist oder Teil eines mobilen elektronischen Geräts ist, und
- mittels der Recheneinheit (7) basierend auf der Bildsequenz (13) aufbereitete Bilddaten erzeugt werden, in denen der Punkt oder der Bereich (16) visuell hervorgehoben ist, wobei die Positionsdaten die aufbereiteten Bilddaten beinhalten; und/oder
- mittels einer Benutzerschnittstelle (20) des Kraftfahrzeugs (8) basierend auf der Bildsequenz (13) eine Darstellung der Umgebung und des Punkts oder des Bereichs (16) in der Umgebung visuell angezeigt wird, mittels der Benutzerschnittstelle (20) ein Korrekturbefehl von einem Benutzer erfasst wird, und mittels der Recheneinheit (7) die Positionsdaten abhängig von dem Korrekturbefehl erzeugt werden.

2. Verfahren nach Anspruch 1,
**dadurch gekennzeichnet, dass** mittels der Recheneinheit (7)
- eine Position des Kraftfahrzeugs (8) in einem vorgegebenen Referenzkoordinatensystem bestimmt wird;
- Ortskoordinaten des Punktes oder des Bereichs (16) in dem Referenzkoordinatensystem basierend auf der Position des Kraftfahrzeugs (8) bestimmt werden, wobei die Positionsdaten die Ortskoordinaten des Punktes oder des Bereichs (16) beinhalten.

3. Verfahren nach Anspruch 2,
**dadurch gekennzeichnet, dass**
- mittels einer Satellitenempfangseinheit (11) des Kraftfahrzeugs (8) Satellitensignale erfasst werden; und
- die Position des Kraftfahrzeugs (8) mittels der Recheneinheit (7) abhängig von den Satellitensignalen bestimmt wird.

4. Verfahren nach Anspruch 2,
**dadurch gekennzeichnet, dass**
die Position des Kraftfahrzeugs (8) mittels der Recheneinheit (7) basierend auf der Bildsequenz (13) und auf Kartendaten einer digitalen Karte des Kraftfahrzeugs (8) bestimmt wird.

5. Verfahren nach Anspruch 2
**dadurch gekennzeichnet, dass**
- mittels des Umfeldsensorsystems (10) oder mittels eines weiteren Umfeldsensorsystems des Kraftfahrzeugs (8) Umfelddaten der Umgebung bestimmt werden, wobei die Umfelddaten separat zu der Bildsequenz (13) erzeugt werden; und
- die Position des Kraftfahrzeugs (8) mittels der Recheneinheit (7) basierend auf den Umfelddaten und auf Kartendaten einer digitalen Karte des Kraftfahrzeugs (8) bestimmt wird.

6. Verfahren nach einem der Ansprüche 1 bis 5,
**dadurch gekennzeichnet, dass**
- die Geste (14) einer Bewegung des Benutzers (15) innerhalb der Umgebung des Kraftfahrzeugs (8) entspricht; und
- die Recheneinheit (7) die Bewegung der Person (15) als die Geste (14) erkennt und den Bereich (16) anhand eines Weges, den die Person (15) zurücklegt, identifiziert.

7. Kommunikationssystem mit einer Recheneinheit (7) für ein Kraftfahrzeug (8), einer Kommunikationsschnittstelle (9) für das Kraftfahrzeug (8) und einem Umfeldsensorsystem (10) für das Kraftfahrzeug (8), wobei das Umfeldsensorsystem (10) dazu eingerichtet ist, eine Bildsequenz (13) einer Umgebung des Kraftfahrzeugs (8) zu erzeugen, die Recheneinheit (7) dazu eingerichtet ist, eine Geste (14) einer Person (15) in der Umgebung basierend auf der Bildsequenz (13) zu erkennen und basierend auf der Geste (14) einen Punkt oder einen Bereich (16) in der Umgebung zu identifizieren und Positionsdaten des Punktes oder des Bereichs (16) zu erzeugen, die Kommunikationsschnittstelle (9) dazu eingerichtet ist, die Positionsdaten zur Übertragung an ein Empfangsgerät (18) bereitzustellen, wobei das Bereitstellen der Positionsdaten zur Übertragung an das Empfangsgerät (18) das Erzeugen eines zu übertragenden Übertragungssignals basierend auf den Positionsdaten beinhaltet, und Kommunikationsschnittstelle (9) dazu eingerichtet ist, die Positionsdaten durch Aussenden des Übertragungssignals drahtlos an das Empfangsgerät (18) zu übertragen, wobei das Empfangsgerät (18) ein Empfangsgerät eines weiteren Kraftfahrzeugs beinhaltet oder Teil eines Servercomputers ist oder Teil eines mobilen elektronischen Geräts ist, und
- die Recheneinheit (7) dazu eingerichtet ist, basierend auf der Bildsequenz (13) aufbereitete Bilddaten zu erzeugen, in denen der Punkt oder der Bereich (16) visuell hervorgehoben ist, wobei die Positionsdaten die aufbereiteten Bilddaten beinhalten; und/oder
- das Kommunikationssystem (12) eine Benutzerschnittstelle (20) für das Kraftfahrzeug (8) aufweist, die dazu eingerichtet ist, basierend auf der Bildsequenz (13) eine Darstellung der Umgebung und des Punkts oder des Bereichs (16) in der Umgebung visuell anzuzeigen und einen Korrekturbefehl von einem Benutzer zu erfassen, und die Recheneinheit (7) dazu eingerichtet ist, die Positionsdaten abhängig von dem Korrekturbefehl zu erzeugen.

8. Kraftfahrzeug mit einem Kommunikationssystem (12) nach Anspruch 7.

## Claims

1. Method for transmitting position data of an environment of a motor vehicle (8), wherein an image sequence (13) of the environment is generated by means of an environment sensor system (10) of the motor vehicle (8), a gesture (14) of a person (15) in the environment is recognized by means of a computing unit (7) of the motor vehicle (8) based on the image sequence (13), a point or a region (16) in the environment is identified by means of the computing unit (7) based on the gesture (14) and position data of the point or the region (16) are generated, the position data are provided by means of a communication interface (9) of the motor vehicle (8) for transmission to a receiving device (18), wherein the provision of the position data for transmission to the receiving device (18) includes the generation of a transmission signal to be transmitted based on the position data, the position data are transmitted wirelessly to the receiving device (18) by means of the communication interface (9) by sending out the transmission signal, wherein the receiving device (18) contains a receiving device of a further motor vehicle or is part of a server computer or is part of a mobile electronic device, and
- processed image data are generated by means of the computing unit (7) based on the image sequence (13), in which data the point or the region (16) is visually highlighted, wherein the position data contain the processed image data; and/or
- a representation of the environment and of the point or the region (16) in the environment is visually displayed by means of a user interface (20) of the motor vehicle (8) based on the image sequence (13), a correction command by a user is detected by means of the user interface (20), and the position data are generated by means of the computing unit (7) on the basis of the correction command.

2. Method according to claim 1,
**characterized in that** by means of the computing unit (7)
- a position of the motor vehicle (8) is determined in a predetermined reference coordinate system;
- location coordinates of the point or the region (16) in the reference coordinate system are determined based on the position of the motor vehicle (8), the position data containing the location coordinates of the point or the region (16).

3. Method according to claim 2,
**characterized in that**
- satellite signals are detected by means of a satellite receiving unit (11) of the motor vehicle (8); and
- the position of the motor vehicle (8) is determined by means of the computing unit (7) on the basis of the satellite signals.

4. Method according to claim 2,
**characterized in that**
the position of the motor vehicle (8) is determined by means of the computing unit (7) based on the image sequence (13) and on map data of a digital map of the motor vehicle (8).

5. Method according to claim 2,
**characterized in that**
- environment data of the environment are determined by means of the environment sensor system (10) or by means of a further environment sensor system of the motor vehicle (8), the environment data being generated separately from the image sequence (13); and
- the position of the motor vehicle (8) being determined by means of the computing unit (7) based on the environment data and on map data of a digital map of the motor vehicle (8).

6. Method according to any of claims 1 to 5,
**characterized in that**
- the gesture (14) corresponds to a movement of the user (15) within the environment of the motor vehicle (8); and
- the computing unit (7) recognizes the movement of the person (15) as the gesture (14) and identifies the region (16) based on a path traveled by the person (15).

7. Communication system comprising a computing unit (7) for a motor vehicle (8), a communication interface (9) for the motor vehicle (8) and an environment sensor system (10) for the motor vehicle (8), wherein the environment sensor system (10) is designed to generate an image sequence (13) of an environment of the motor vehicle (8), the computing unit (7) is designed to recognize a gesture (14) of a person (15) in the environment based on the image sequence (13) and to identify a point or a region (16) in the environment based on the gesture (14) and to generate position data of the point or the region (16), the communication interface (9) is designed to provide the position data for transmission to a receiving device (18), wherein the provision of the position data for transmission to the receiving device (18) includes the generation of a transmission signal to be transmitted based on the position data, and the communication interface (9) is designed to transmit the position data wirelessly to the receiving device by sending out the transmission signal (18), wherein the receiving device (18) contains a receiving device of a further motor vehicle or is part of a server computer or is part of a mobile electronic device, and
- the computing unit (7) is designed to generate processed image data based on the image sequence (13), in which data the point or the region (16) is visually highlighted, wherein the position data contain the processed image data; and/or
- the communication system (12) has a user interface (20) for the motor vehicle (8), which is designed to visually display a representation of the environment and of the point or the region (16) in the environment based on the image sequence (13) and to detect a correction command by a user, and the computing unit (7) is designed to generate the position data on the basis of the correction command.

8. Motor vehicle comprising a communication system (12) according to claim 7.

## Revendications

1. Procédé pour la transmission de données de position d'un environnement d'un véhicule automobile (8), dans lequel une séquence d'images (13) de l'environnement est générée à l'aide d'un système de capteurs d'environnement (10) du véhicule automobile (8), un geste (14) d'une personne (15) dans l'environnement est reconnu à l'aide d'une unité de calcul (7) du véhicule automobile (8) sur la base de la séquence d'images (13), un point ou une zone (16) dans l'environnement est identifié(e) à l'aide de l'unité de calcul (7) sur la base du geste (14) et des données de position du point ou de la zone (16) sont générées, les données de position sont fournies à l'aide d'une interface de communication (9) du véhicule automobile (8) pour la transmission à un appareil de réception (18), dans lequel la fourniture des données de position pour la transmission à l'appareil de réception (18) contient la génération d'un signal de transmission à transmettre sur la base des données de position, les données de position sont transmises sans fil à l'appareil de réception (18) à l'aide de l'interface de communication (9) en émettant le signal de transmission, dans lequel l'appareil de réception (18) contient un appareil de réception d'un autre véhicule automobile ou fait partie d'un ordinateur serveur ou fait partie d'un appareil électronique mobile, et
- des données d'image préparées sont générées à l'aide de l'unité de calcul (7) sur la base de la séquence d'images (13), données dans lesquelles le point ou la zone (16) est visuellement mis(e) en évidence, dans lequel les données de position contiennent les données d'image préparées ; et/ou
- à l'aide d'une interface utilisateur (20) du véhicule automobile (8), une représentation de l'environnement et du point ou de la zone (16) dans l'environnement est affichée visuellement sur la base de la séquence d'images (13), à l'aide de l'interface utilisateur (20), une instruction de correction est saisie par un utilisateur, et à l'aide de l'unité de calcul (7), les données de position sont générées en fonction de l'instruction de correction.

2. Procédé selon la revendication 1,
**caractérisé en ce qu'**à l'aide de l'unité de calcul (7)
- une position du véhicule automobile (8) est déterminée dans un système de coordonnées de référence prédéfini ;
- des coordonnées de lieu du point ou de la zone (16) dans le système de coordonnées de référence sont déterminées sur la base de la position du véhicule automobile (8), dans lequel les données de position contiennent les coordonnées de lieu du point ou de la zone (16).

3. Procédé selon la revendication 2,
**caractérisé en ce que**
- des signaux satellites sont acquis à l'aide d'une unité de réception satellite (11) du véhicule automobile (8) ; et
- la position du véhicule automobile (8) est déterminée à l'aide de l'unité de calcul (7) en fonction des signaux satellites.

4. Procédé selon la revendication 2,
**caractérisé en ce que**
la position du véhicule automobile (8) est déterminée à l'aide de l'unité de calcul (7) sur la base de la séquence d'images (13) et de données cartographiques d'une carte numérique du véhicule automobile (8).

5. Procédé selon la revendication 2
**caractérisé en ce que**
- des données d'environnement de l'environnement sont déterminées à l'aide du système de capteurs d'environnement (10) ou à l'aide d'un autre système de capteurs d'environnement du véhicule automobile (8), dans lequel les données d'environnement sont générées séparément de la séquence d'images (13) ; et
- la position du véhicule automobile (8) est déterminée à l'aide de l'unité de calcul (7) sur la base des données d'environnement et de données cartographiques d'une carte numérique du véhicule automobile (8).

6. Procédé selon l'une des revendications 1 à 5,
**caractérisé en ce que**
- le geste (14) correspond à un déplacement de l'utilisateur (15) au sein de l'environnement du véhicule automobile (8) ; et
- l'unité de calcul (7) reconnaît le mouvement de la personne (15) comme étant le geste (14) et identifie la zone (16) sur la base d'un trajet que la personne (15) parcourt.

7. Système de communication comportant une unité de calcul (7) pour un véhicule automobile (8), une interface de communication (9) pour le véhicule automobile (8) et un système de capteurs d'environnement (10) pour le véhicule automobile (8), dans lequel le système de capteurs d'environnement (10) est conçu pour générer une séquence d'images (13) d'un environnement du véhicule automobile (8), l'unité de calcul (7) est conçue pour reconnaître un geste (14) d'une personne (15) dans l'environnement sur la base de la séquence d'images (13) et, sur la base du geste (14), pour identifier un point ou une zone (16) dans l'environnement et pour générer des données de position du point ou de la zone (16), l'interface de communication (9) est conçue pour fournir les données de position pour la transmission à un appareil de réception (18), dans lequel la fourniture des données de position pour la transmission à l'appareil de réception (18) contient la génération d'un signal de transmission à transmettre sur la base des données de position, et l'interface de communication (9) est conçue pour transmettre sans fil les données de position à l'appareil de réception (18) en émettant le signal de transmission, dans lequel l'appareil de réception (18) contient un appareil de réception d'un autre véhicule automobile ou fait partie d'un ordinateur serveur ou fait partie d'un appareil électronique mobile, et
- l'unité de calcul (7) est conçue pour générer, sur la base de la séquence d'images (13), des données d'image préparées dans lesquelles le point ou la zone (16) est visuellement mis(e) en évidence, dans lequel les données de position contiennent les données d'image préparées ; et/ou
- le système de communication (12) présente une interface utilisateur (20) pour le véhicule automobile (8), qui est conçue pour afficher visuellement, sur la base de la séquence d'images (13), une représentation de l'environnement et du point ou de la zone (16) dans l'environnement et pour détecter une instruction de correction provenant d'un utilisateur, et l'unité de calcul (7) est conçue pour générer les données de position en fonction de l'instruction de correction.

8. Véhicule automobile comportant un système de communication (12) selon la revendication 7.
